# EUROPÄISCHE PATENTSCHRIFT

(11) **EP 1 184 543 B1**
(45) Veröffentlichungstag und Bekanntmachung des Hinweises auf die Patenterteilung: **12.09.2007**
(21) Anmeldenummer: 01115336.8
(22) Anmeldetag: 26.06.2001
(51) Int. Cl.: F01N 3/02, F01N 3/28, F01N 1/08, F01N 1/10, F01N 1/02

(54) **Abgasreinigungssystem für Kraftfahrzeuge, insbesondere Diesel-Nutzfahrzeuge**
Exhaust purification system for motor vehicles, particularly Diesel utility vehicles
Système de purification de gaz d'échappement pour véhicules à moteurs, en particulier véhicules utilitaires Diesel

(30) Priorität: 30.08.2000 DE 10042542
(43) Veröffentlichungstag der Anmeldung: 06.03.2002
(73) Patentinhaber: J. Eberspächer GmbH & Co. KG, 73730 Esslingen (DE)
(72) Erfinder: Woerner, Siegfried, 73734 Esslingen (DE); Zacke, Peter, Dr., 73095 Albershausen (DE); Hauber, Thomas, Dr., 73776 Altbach (DE); Buhmann, Rudolf, 73732 Esslingen (DE); Werni, Marcus, 71334 Waiblingen (DE)

(56) Entgegenhaltungen:
- EP-A- 0 220 505
- EP-A- 0 579 956
- EP-A- 0 931 913
- WO-A-90/12950
- WO-A-97/05368
- WO-A-99/35378
- DE-A- 3 516 442
- DE-U- 9 217 940
- US-A- 5 043 147

## Beschreibung

Die Erfindung betrifft ein Abgasreinigungssystem für Kraftfahrzeuge nach dem Oberbegriff von Anspruch 1.

Eine derartiges gattungsgemäßes Abgasreinigungssystem ist aus der WO 90/12950 bekannt. Dieses kompakte, in einem gemeinsamen Gehäuse in Mehrkammerbauweise angeordnete Abgasreinigungssystem weist einen beispielsweise mit einer platin- und/oder rhodiumhaltigen Beschichtung versehenen Katalysator auf, der in bekannter Weise die Umsetzung von Stickoxiden und Kohlenmonoxyd zu Stickstoff bzw. Kohlendioxyd bewirkt.

Die DE 35 16 442 A1 zeigt ein in einem einzigen Gehäuse untergebrachtes Abgasreinigungssystem mit Schalldämpfer, Katalysator sowie Abgaspartikelfilter-Element. Dieses vorbekannt te Abgasreinigungssystem wird dadurch gebildet, dass in gasführenden Kanälen des Schalldämpfers schadstoffmindernde Vorrichtungen in Form von leicht austauschbaren Patronen eingelegt werden.

Aufgabe der Erfindung ist es, bei dem gattungsgemäßen Abgasreinigungssystem unter Belbehaltung von dessen Kompaktheit die Stickoxidreduktion zu verbessern.

Diese Aufgabe wird durch ein Abgasreinigungssystem mit den Merkmalen in Anspruch 1 gelöst. Vorteilhafte Weiterbildungen dieses Abgasreinigungssystems ergeben sich aus den Unteransprüchen.

Durch die Erfindung wird ein Kompaktsystem mit den integrierten Funktionsmodulen Schalldämpfung, NOx-Reduktion und Partikel-Reduktion mit minimalem Bauvolumen und niedrigen Fertigungskosten geschaffen. Das Kompaktsystem eignet sich insbesondere für mittlere bis schwere Diesel-Nutzfahrzeuge. Das Kompaktsystem erfüllt auch verschärfte Emissionsbestimmungen. In Verbindung mit der Dämpfung des Abgaslärms werden in einem Kombisystem die Reduzierung der drei Funktionskomponenten in einem einzigen Funktionsbauteil übernommen.

Das Kompaktsystem zur Nachbehandlung der Schadstoffkomponenten HC/NOx/Partikel und Geräuschdämpfung kennzeichnet sich insbesondere durch:
- Geräuschdämpfung / NOx-Reduktion / Partikel-Reduktion durch Zusammenfassung der drei Funktionselemente in einem einzigen Gehäuse mit minimalem Bauvolumen
- ein Dieselpartikelfilter-Element mit integriertem Diesel-Brenner insbesondere zur Notgeneration bei extrem kalten Betriebszuständen zum Beispiel bei einer kurzen Stadtfahrt
- einen dem Dieselpartikelfilter-Element nachgeschalteten SCR-Katalysator mit vorgeschalteter Harnstoffeinspritzung plus Mischelement
- eine Reinigungsmöglichkeit des Dieselpartikelfilter-Elements durch Ausblasen der Aschepartikel rückwärts über den Brenneranschluß nach Entfernen des Diesel-Brenners und nach Öffnen des Blindstopfens
- eine Einlagerung des Dieselpartikelfilter-Elements und des SCR-Katalysators in das Schalldämpfer-Absorptionsmaterial, wodurch keine Wärmeverluste entstehen bzw. ein sehr schnelles System LIGHT OFF bzw. eine optimale Filterregeneration eingerichtet werden
- eine optimale Harnstoffvermischung durch ein spezielles Mischelement, z.B. eine eingesetzte Strömungsspirale, eine halbkreisförmige Strömungsschleife und/oder durch eine Mischdüse

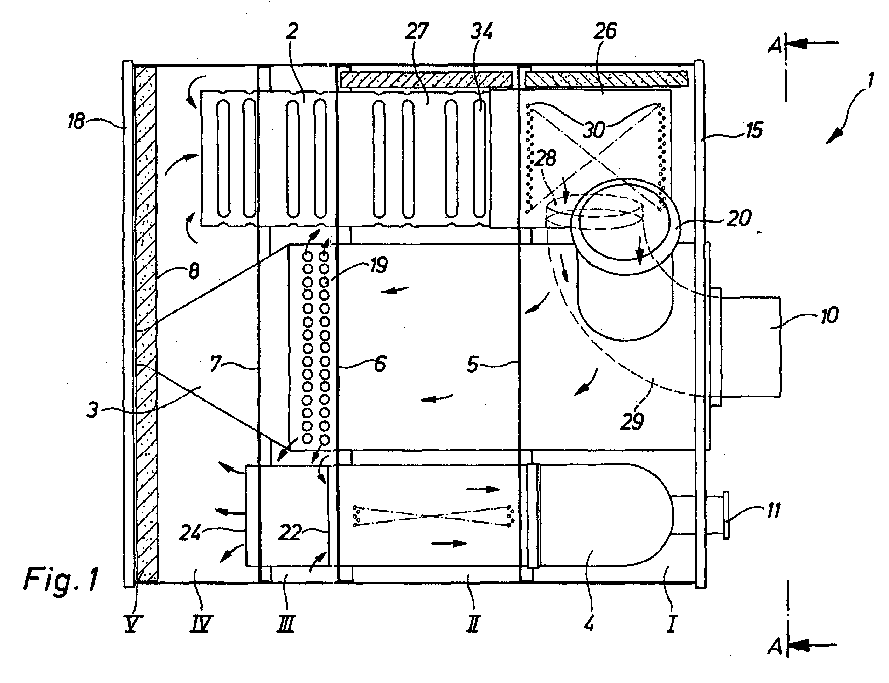

Die Erfindung wird nachfolgend anhand eines Ausführungsbeispiels unter Bezugnahme auf die beigefügte Zeichnung näher erläutert; es zeigen
- Figur 1: ein kombiniertes Abgasreinigungssystem für ein schweres Diesel-Nutzfahrzeug in Form eines Abgasschalldämpfers in Mehrkammerbauweise mit Katalysator, Dieselpartikelfilter-Element und U-förmigem Harnstoffeinspritz-Rohrelement schematisch in einer vertikalen axialen Schnittansicht,

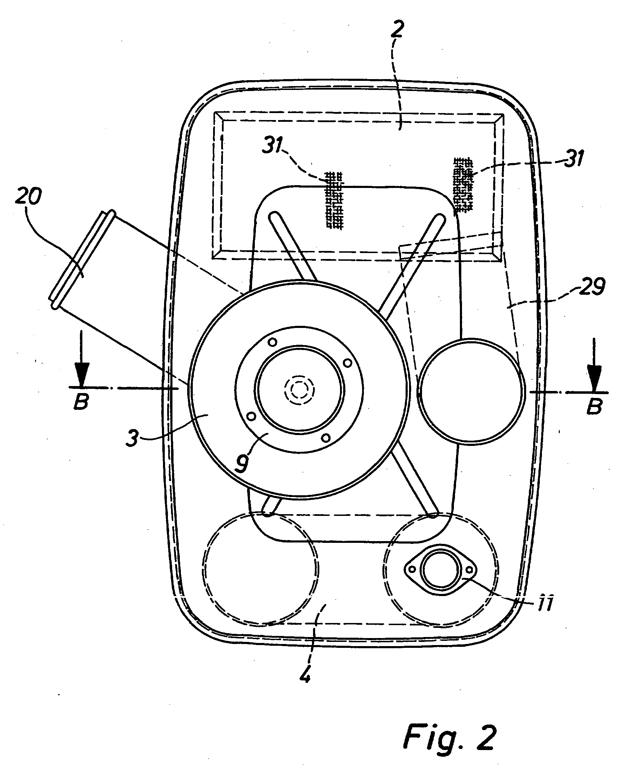

- Figur 2: das Abgasreinigungssystem nach Figur 1 in einer schematischen Stirnansicht längs der Linie A-A der Figur 1 unter Weglassung des Diesel-Brenners,

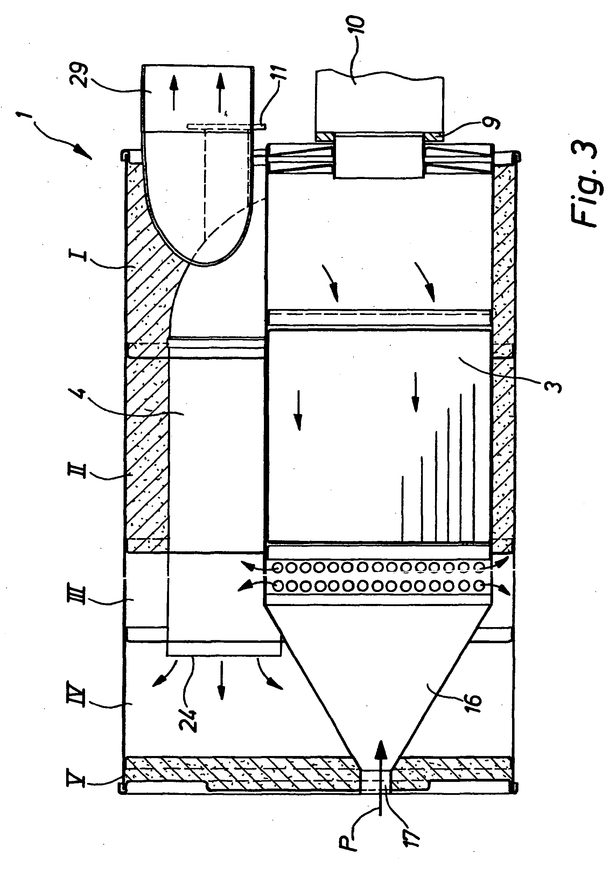

- Figur 3: das Abgasreinigungssystem nach den Figuren 1 und 2 in einem schematischen Horizontalschnitt längs der Linie B-B der Figur 2, und

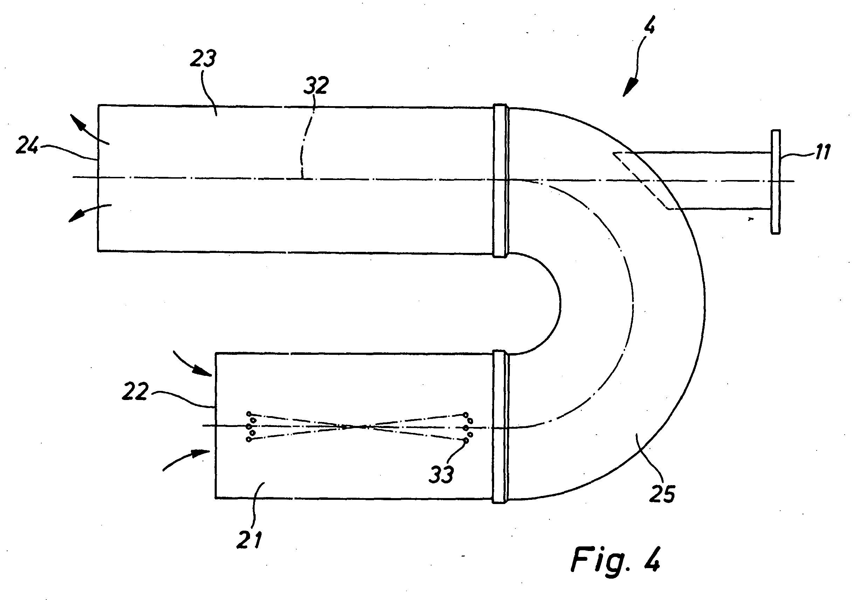

- Figur 4: das U-förmige Harnstoffeinspritz-Rohrelement des Abgasreinigungssystems in einer schematischen Draufsicht ähnlich Figur 3 unter Weglassung des Dieselpartikelfilter-Elements.

Gemäß Zeichnung umfaßt ein Abgasreinigungssystem in Form eines Diesel-Abgasreinigungssystems für schwere Nutzfahrzeuge drei Funktionselemente, nämlich einen Abgas-Schalldämpfer 1 zur Dämpfung des Abgaslärms, einen SCR-Katalysator 2 zur selektiven, katalytischen HC/NOx-Reduktion nebst vorgeschalteter Harnstoffeinspritzung durch ein U-förmiges Harnstoffeinspritz-Rohrelement 4, sowie ein Abgaspartikelfilter-Element 3 zur Abgaspartikel-Reduzierung durch Ausfiltern von Rußpartikeln und dergleichen sowie gegebenenfalls Nachverbrennung bzw. Notregeneration durch einen angeschlossenen Diesel-Brenner 10.

Der Abgasschalldämpfer 1, das Abgaspartikelfilter-Element 2 und der Katalysator sind in einem gemeinsamen Gehäuse zusammengefaßt und bilden eine bauliche, funktionelle Einheit.

Der Abgasschalldämpfer 1 ist in Mehrkammerbauweise mit zwei Reflexionskammern und drei Absorptionskammern im gemeinsamen Gehäuse mit im Querschnitt ovalem bis rechteckigem Außenmantel und ebenen stirnseitigen Axialenden 15, 18 ausgeführt ist, wobei die zwei Reflexionskammern und die drei Absorptionskammern durch radiale Trennwände voneinander abgetrennt sind.

Im Gehäuse sind in Axialrichtung insbesondere kammerübergreifend und parallel zueinander der SCR-Katalysator 2, das Dieselpartikelfilter-Element 3 und das U-förmige Harnstoffeinspritz-Rohrelement 4 vorgesehen.

Der SCR-Katalysator 2 befindet sich im Gehäuse oben, das Dieselpartikelfilter-Element 3 in der Mitte und das U-förmige Rohrelement 4 unten.

Das Gehäuse ist insbesondere durch vier voneinander beabstandete radiale Trennwände 5, 6, 7, 8 in fünf Kammern I, II, III, IV, V unterteilt, wobei die erste Trennwand 5 zwischen der ersten Kammer I und der zweiten Kammer II, die zweite Trennwand 6 zwischen der zweiten Kammer II und der dritten Kammer III sowie die dritte Trennwand 7 zwischen der dritten Kammer III und der vierten Kammer IV Durchgangsöffnungen für eine befestigte Aufnahme des SCR-Katalysators 2, des Dieselpartikelfilter-Elements 3 sowie des U-förmigen Rohrelements 4 aufweisen.

Das Dieselpartikelfilter-Element 2 umfaßt einen Anschlußflansch 9, an welchem gehäuseaußenseitig der Diesel-Brenner 10 lösbar befestigt ist, wobei der Anschlußflansch in der Ebene des der ersten Kammer I zugeordneten ersten stirnseitigen Axialendes 15 des Gehäuses gelegen und befestigt ist, welches die erste Kammer I zusammen mit der ersten Trennwand 5 in Axialrichtung begrenzt.

Das Dieselpartikelfilter-Element 2 weist im Bereich des anderen, zweiten stirnseitigen Axialendes 18 des Gehäuses eine konische Reinigungstulpe 16 mit einem öffenbaren Blindstopfen 17 am verjüngten Ende der Reinigungstulpe 16 auf, wobei das verjüngte Ende der Reinigungstulpe einschießlich Blindstopfen in der Ebene des zweiten stirnseitigen Axialendes 18 des Gehäuses gelegen ist. Bei Nichtbetrieb des Abgasreinigungssystems kann nach Entfernen des Diesel-Brenners und nach Öffnen des Blindstopfens der Reinigungstulpe das Dieselpartikelfil ter-Element durch Ausblasen der Aschepartikel rückwärts in Pfeilrichtung P gereinigt werden.

Das Dieselpartikelfilter-Element 2 besitzt ferner eine erste Mantelperforation 19 im Bereich der dritten Kammer III für einen radial nach außen gerichteten Durchtritt des Abgases.

Auch hat das Dieselpartikelfilter-Element 2 einen radialen Abgaseintritt im Bereich der ersten Kammer I, wobei ein gehäusemantelseitiger Abgaseinlaßstutzen 20 vorgesehen ist.

Das U-förmige Rohrelement 4 besitzt einen kurzen geradlinigen Rohrabschnitt 21 mit einem axialen Abgaseingang 22 im Bereich der dritten Kammer III und eine längeren geradlinigen Rohrabschnitt 23 mit einem axialen Abgasausgang 24 im Bereich der vierten Kammer IV sowie einen 180°-Krümmungsabschnitt 25 im Bereich der ersten Kammer I, wobei etwa in Verlängerung der Achse 32 des längeren Rohrabschnitt 23 ein geradliniger im wesentlichen zur vorgenannten Achse 32 ausgerichteter Harnstoffzufuhrstutzen 11 in den 180°-Krümmungsabschnitt 25 einmündet, der zumindest bis zum ersten Axialende 15 des Gehäuses reicht und mit einer Mischdüse versehen ist. Dadurch kann chemisch vergleichsweise aggressiver Harnstoff, entfernt von der Rohrwand, zentral in den längeren Rohrabschnitt 23 eingesprüht werden, der dann in Ammoniak umgewandelt wird, welches für die Abgasbehandlung im nachfolgenden SCR-Katalysator benötigt wird.

Der kurze und der lange geradlinige Rohrabschnitt 21, 23 verlaufen parallel zueinander in gleicher Höhe des Gehäuses.

Der kürzere geradlinige Rohrabschnitt 21 besitzt eine Mantelperforation 33 im Bereich der zweiten Kammer II.

Der SCR-Katalysator 2 umfaßt ausgangsseitig im Bereich der ersten Kammer I ein axial ausgerichtetes hohles Abgasauslaß-Gehäuseteil 26, während der Katalysatorkern 27 im Bereich der vierten, dritten und zweiten Kammer IV, III, II gelegen ist.

Das Abgasauslaß-Gehäuseteil 26 des SRC-Katalysators 2 hat im Bereich der ersten Kammer I eine mantelseitige Abgasauslaß-Öffnung 28, an welche ein 90°-Rohrkrümmer 29 angeschlossen ist, der zum ersten Axialende 15 des Gehäuses führt und den Abgasausgang des Abgas-Schalldämpfers 1 bildet.

Der hohle Abgasauslaß-Gehäuseteil 26 hat ferner eine Mantelperforation 30 und eine stirnseitige Perforation 31, welche dem ersten stirnseitigen Axialende 15 des Gehäuses zugewandt ist.

Das Gehäuse des Katalysators 2 besitzt im Bereich des Katalysatorkerns 27 Versteifungssicken 34 und ist kastenförmig aufgebaut.

Der SCR-Katalysator 2 und das Dieselpartikelfilter-Element 3 sowie das U-förmige Rohrelement 4 sind im Bereich der ersten und der zweiten Kammer I, II in einem Absorptionsmaterial eingelagert und mithin die erste und die zweite Kammer I, II als Absorptionskammern ausgebildet, während der dritte und die vierte Kammer III, IV Reflexionskammern sind.

Die bereits erwähnte fünfte Kammer V ist eine Absorptionskammer und als solche mit einem Schalldämpfer-Absorptionsmaterial ausgefüllt. Sie ist insbesondere am zweiten stirnseitigen Axialende 18 des Gehäuses gelegen und der vierten Kammer IV nachgeordnet und durch die vierte Trennwand 8 axial abgegrenzt, welche mit Perforationen ausgebildet ist.

## Patentansprüche

1. Abgasreinigungssystem für Kraftfahrzeuge, insbesondere Diesel-Abgasreinigungssystem für mittlere bis schwere Nutzfahrzeuge, mit Abgasschalldämpfer, Katalysator und Abgaspartikelfilter-Element,
wobei der Abgasschalldämpfer (1), das Abgaspartikelfilter-Element (3) und der Katalysator (2) in einem gemeinsamen Gehäuse zusammengefasst sind und eine bauliche, funktionelle Einheit bilden,
wobei der Abgasschalldämpfer (1) in Mehrkammerbauweise mit zumindest einer Reflexionskammer und zumindest einer Absorptionskammer im gemeinsamen Gehäuse ausgeführt ist,
wobei die Reflexionskammer(n) und Absorptionskammer(n) durch zumindest eine radiale Trennwand voneinander abgetrennt sind
und wobei das Abgaspartikelfilter-Element ein Dieselpartikelfilter-Element (3) ist,
**dadurch gekennzeichnet,**
**dass** der Katalysator ein SCR-Katalysator (2) für eine selektive katalytische Reduktion der AbgasSchadstoffe ist und
**dass** im Gehäuse in Axialrichtung kammerübergreifend und im Wesentlichen parallel zueinander der SCR-Katalysator (2), das Dieselpartikelfilter-Element (3) und ein Harnstoffeinspritz-Rohrelement (4) vorgesehen sind.

2. Abgasreinigungssystem nach Anspruch 1, **dadurch gekennzeichnet, dass** das Harnstoffeinspritz-Rohrelement (4) U-förmig ist.

3. Abgasreinigungssystem nach Anspruch 1 oder 2,
**dadurch gekennzeichnet,**
**daß** das Gehäuse durch zumindest drei voneinander beabstandete radiale Trennwände (5, 6, 7, 8) in zumindest vier Kammern (I, II, III, IV, V) unterteilt ist, wobei die erste Trennwand (5) zwischen der ersten Kammer (I) und der zweiten Kammer (II), die zweite Trennwand (6) zwischen der zweiten Kammer (II) und der dritten Kammer (III) sowie die dritte Trennwand (7) zwischen der dritten Kammer (III) und der vierten Kammer (IV) Durchgangsöffnungen für eine befestigte Aufnahme des SCR-Katalysators (2), des Dieselpartikelfilter-Elements (3) sowie des Rohrelements (4) aufweisen.

4. Abgasreinigungssystem nach Anspruch 2 oder 3,
**dadurch gekennzeichnet,**
**daß** das Dieselpartikelfilter-Element (2) einen Anschlußflansch (9) aufweist, an welchem gehäuseaußenseitig ein Diesel-Brenner (10) lösbar befestigt ist, wobei der Anschlußflansch in der Ebene eines der ersten Kammer (I) zugeordneten ersten stirnseitigen Axialendes (15) des Gehäuses gelegen und befestigt ist, welches die erste Kammer (I) zusammen mit der ersten Trennwand (5) in Axialrichtung begrenzt.

5. Abgasreinigungssystem nach einem der Ansprüche 1 bis 4,
**dadurch gekennzeichnet,**
**daß** das Dieselpartikelfilter-Element (2) im Bereich des anderen, zweiten stirnseitigen Axialendes (18) des Gehäuses eine konische Reinigungstulpe (16) mit einem öffenbaren Blindstopfen (17) am verjüngten Ende der Reinigungstulpe (16) aufweist, wobei das verjüngte Ende der Reinigungstulpe einschießlich Blindstopfen in der Ebene des zweiten stirnseitigen Axialendes (18) des Gehäuses gelegen ist.

6. Abgasreinigungssystem nach einem der Ansprüche 1 bis 5,
**dadurch gekennzeichnet,**
**daß** das Dieselpartikelfilter-Element (2) eine erste Mantelperforation (19) im Bereich der dritten Kammer (III) für einen radial nach außen gerichteten Durchtritt des Abgases besitzt.

7. Abgasreinigungssystem nach einem der Ansprüche 1 bis 6,
**dadurch gekennzeichnet,**
**daß** das Dieselpartikelfilter-Element (2) einen radialen Abgaseintritt im Bereich der ersten Kammer (I) besitzt, wobei ein gehäusemantelseitiger Abgaseinlaßstutzen (20) vorgesehen ist.

8. Abgasreinigungssystem nach einem der Ansprüche 2 bis 7,
**dadurch gekennzeichnet,**
**daß** das U-förmige Rohrelement (4) einen kurzen geradlinigen Rohrabschnitt (21) mit einem axialen Abgaseingang (22) im Bereich der dritten Kammer (III) und eine längeren geradlinigen Rohrabschnitt (23) mit einem axialen Abgasausgang (24) im Bereich der vierten Kammer (IV) sowie einen 180°-Krümmungsabschnitt (25) im Bereich der ersten Kammer (I) aufweist, wobei etwa in Verlängerung der Achse (32) des längeren Rohrabschnitt (23) ein geradliniger im wesentlichen zur vorgenannten Achse (32) ausgerichteter Harnstoffzufuhrstutzen (11) in den 180°-Krümmungsabschnitt (25) einmündet, der zumindest bis zum ersten Axialende (15) des Gehäuses reicht.

9. Abgasreinigungssystem nach Anspruch 8,
**dadurch gekennzeichnet,**
**daß** der kurze und der lange geradlinige Rohrabschnitt (21, 23) parallel zueinander in gleicher Höhe des Gehäuses verlaufen.

10. Abgasreinigungssystem nach Anspruch 8 oder 9,
**dadurch gekennzeichnet,**
**daß** der kürzere geradlinige Rohrabschnitt (21) eine Mantelperforation (33) im Bereich der zweiten Kammer (II) besitzt.

11. Abgasreinigungssystem nach einem der Ansprüche 1 bis 10,
**dadurch gekennzeichnet,**
**daß** der SCR-Katalysator (2) ausgangsseitig im Bereich der ersten Kammer (I) ein axial ausgerichtetes hohles Abgasauslaß-Gehäuseteil (26) besitzt, während der Katalysatorkern (27) im Bereich der vierten, dritten und zweiten Kammer (IV, III, II) gelegen ist.

12. Abgasreinigungssystem nach Anspruch 11,
**dadurch gekennzeichnet,**
**daß** das Abgasauslaß-Gehäuseteil (26) des SRC-Katalysators (2) im Bereich der ersten Kammer (I) eine mantelseitige Abgasauslaß-Öffnung (28) besitzt, an welche ein Rohrkrümmer (29) angeschlossen ist, der zum ersten Axialende (15) des Gehäuses führt und den Abgasausgang des Abgas-Schalldämpfers (1) bildet.

13. Abgasreinigungssystem nach Anspruch 11 oder 12,
**dadurch gekennzeichnet**,
der hohle Abgasauslaß-Gehäuseteil (26) eine Mantelperforation (30) und eine stirnseitige Perforation (31) besitzt.

14. Abgasreinigungssystem nach einem der Ansprüche 11 bis 13,
**dadurch gekennzeichnet,**
**daß** das Gehäuse des Katalysatorkerns (27) Versteifungssicken (34) aufweist.

15. Abgasreinigungssystem nach einem der Ansprüche 1 bis 14,
**dadurch gekennzeichnet,**
**daß** der SCR-Katalysator (2) ein kastenförmiges Gehäuse aufweist.

16. Abgasreinigungssystem nach einem der Ansprüche 2 bis 15,
**dadurch gekennzeichnet,**
**daß** der SCR-Katalysator (2) und das Dieselpartikelfilter-Element (3) sowie das U-förmige Rohrelement (4) im Bereich der ersten und der zweiten Kammer (I, II) in einem Absorptionsmaterial eingelagert und mithin die erste und die zweite Kammer (I, II) als Absorptionskammern ausgebildet sind, während der dritte und die vierte Kammer (III, IV) Reflexionskammern sind.

17. Abgasreinigungssystem nach einem der Ansprüche 3 bis 16,
**dadurch gekennzeichnet,**
**daß** am zweiten stirnseitigen Axialende (18) des Gehäuses eine der vierten Kammer (IV) nachgeordnete als Absorptionskammer ausgebildete, Schalldämpfer-Absorptionsmaterial enthaltende fünfte Kammer (V) vorgesehen ist, wobei die vierte Trennwand (8) Perforationen aufweist.

## Claims

1. Exhaust gas cleaning system for motor vehicles, in particular diesel exhaust gas cleaning system for medium-sized to heavy utility vehicles, having an exhaust gas sound damper, catalytic converter and exhaust gas particle filter element,
wherein the exhaust gas sound damper (1), the exhaust gas particle filter element (3) and the catalytic converter (2) are combined in a common housing and form a structural, functional unit,
wherein the exhaust gas sound damper (1) is embodied in a multi-chamber design with at least one reflection chamber and at least one absorption chamber in the common housing,
wherein the reflection chamber or chambers and absorption chamber or chambers are separated from one another by at least one radial dividing wall,
and wherein the exhaust gas particle filter element is a diesel particle filter element (3),
**characterized in that** the catalytic converter is an SCR catalytic converter (2) for a selective catalytic reduction of the exhaust gas pollutants, and
**in that** the SCR catalytic converter (2), the diesel particle filter element (3) and a urea injection tubular element (4) are provided so as to extend over multiple chambers in the axial direction in the housing and essentially parallel to one another.

2. Exhaust gas cleaning system according to Claim 1, **characterized in that** the urea injection tubular element (4) is U-shaped.

3. Exhaust gas cleaning system according to Claim 1 or 2, **characterized in that** the housing is divided into at least four chambers (I, II, III, IV, V) by means of at least three radial dividing walls (5, 6, 7, 8) which are spaced apart from one another, wherein the first dividing wall (5) has, between the first chamber (I) and the second chamber (II), and the second dividing wall (6) has, between the second chamber (II) and the third chamber (III), and the third dividing wall (7) has, between the third chamber (III) and the fourth chamber (IV), through-openings for the SCR catalytic converter (2), the diesel particle filter element (3) and the tubular element (4) to be held in a secured fashion.

4. Exhaust gas cleaning system according to Claim 2 or 3, **characterized in that** the diesel particle filter element (3) has a connecting flange (9) to which a diesel burner (10) is detachably secured on the outside of the housing, wherein the connecting flange is located and secured in the plane of a first front-side axial end (15) of the housing which is assigned to the first chamber (I) and which bounds the first chamber (I) together with the first dividing wall (5) in the axial direction.

5. Exhaust gas cleaning system according to one of Claims 1 to 4, **characterized in that** the diesel particle filter element (3) has, in the region of the other, second front-side axial end (18) of the housing, a conical cleaning sleeve (16) with an openable blind stopper (17) at the tapering end of the cleaning sleeve (16), wherein the tapering end of the cleaning sleeve including the blind stopper is located in the plane of the second, front-side axial end (18) of the housing.

6. Exhaust gas cleaning system according to one of Claims 1 to 5, **characterized in that** the diesel particle filter element (3) has a first outer casing perforation (19) in the region of the third chamber (III) for the exhaust gas to pass through in a radially outwardly directed fashion.

7. Exhaust gas cleaning system according to one of Claims 1 to 6, **characterized in that** the diesel particle filter element (3) has a radial exhaust gas inlet in the region of the first chamber (I), wherein an exhaust gas inlet connector (20) on the outer casing of the housing is provided.

8. Exhaust gas cleaning system according to one of Claims 2 to 7, **characterized in that** the U-shaped tubular element (4) has a short linear tubular section (21) with an axial exhaust gas inlet (22) in the region of the third chamber (III) and a longer, linear tubular section (23) with an axial exhaust gas outlet (24) in the region of the fourth chamber (IV) as well as a 180° curvature section (25) in the region of the first chamber (I), wherein, approximately in the extension of the axis (32) of the longer tubular section (23), a linear urea feed connector (11), which is essentially aligned with the abovementioned axis (32), opens into the 180° curvature section (25) which extends at least as far as the first axial end (15) of the housing.

9. Exhaust gas cleaning system according to Claim 8, **characterized in that** the short and the long linear tubular sections (21, 23) extend parallel to one another at the same level of the housing.

10. Exhaust gas cleaning system according to Claim 8 or 9, **characterized in that** the shorter linear tubular section (21) has an outer casing perforation (33) in the region of the second chamber (II).

11. Exhaust gas cleaning system according to one of Claims 1 to 10, **characterized in that** the SCR catalytic converter (2) has, at the outlet end in the region of the first chamber (I), an axially aligned, hollow exhaust gas outlet housing part (26), while the catalytic converter core (27) is located in the region of the fourth, third and second chambers (IV, III, II).

12. Exhaust gas cleaning system according to Claim 11, **characterized in that** the exhaust gas outlet housing part (26) of the SRC catalytic converter (2) has, in the region of the first chamber (I), an exhaust gas outlet opening (28) in the outer casing, to which exhaust gas outlet opening (28) a manifold (29) is connected, which manifold (29) leads to the first axial end (15) of the housing and forms the exhaust gas outlet of the exhaust gas sound damper (1).

13. Exhaust gas cleaning system according to Claim 11 or 12, **characterized in that** the hollow exhaust gas outlet housing part (26) has an outer casing perforation (30) and a front-side perforation (31).

14. Exhaust gas cleaning system according to one of Claims 11 to 13, **characterized in that** the housing of the catalytic converter core (27) has reinforcement beads (34).

15. Exhaust gas cleaning system according to one of Claims 1 to 14, **characterized in that** the SCR catalytic converter (2) has a box-shaped housing.

16. Exhaust gas cleaning system according to one of Claims 2 to 15, **characterized in that** the SCR catalytic converter (2) and the diesel particle filter element (3) and the U-shaped tubular element (4) are embedded in an absorption material in the region of the first and second chambers (I, II), and the first and the second chambers (I, II) are consequently embodied as absorption chambers, while the third and fourth chambers (III, IV) are reflection chambers.

17. Exhaust gas cleaning system according to one of Claims 3 to 16, **characterized in that** a fifth chamber (V) which is arranged downstream of the fourth chamber (IV), is embodied as an absorption chamber and contains sound damper absorption material is provided at the second front-side axial end (18) of the housing, wherein the fourth dividing wall (8) has perforations.

## Revendications

1. Système d'épuration des gaz d'échappement pour un véhicule automobile, notamment système d'épuration des gaz d'échappement diesel pour utilitaires moyens à lourds, avec un silencieux pour gaz d'échappement, un catalyseur et un élément de filtration des particules de gaz d'échappement, le silencieux pour gaz d'échappement (1), l'élément de filtration des particules de gaz d'échappement (3) et le catalyseur (2) étant regroupés dans carter commun et formant une unité de construction fonctionnelle,
le silencieux pour gaz d'échappement (1) étant réalisé en version à plusieurs chambres, avec au moins une chambre de réflexion et au moins une chambre d'absorption dans le carter commun,
la (les) chambre(s) de réflexion et la (les) chambre(s) d'absorption étant séparées les unes des autres par au moins une paroi de séparation radiale
et l'élément de filtration des particules de gaz d'échappement étant un élément de filtration de particules diesel (3),
**caractérisé en ce que**
le catalyseur est un catalyseur SCR (2) pour une réduction catalytique sélective des polluants dans les gaz d'échappement et
le catalyseur SCR (2), l'élément de filtration de particules diesel (3) et un élément tubulaire d'injection d'urée (4) sont prévus dans le carter, de façon à chevaucher les chambres en direction axiale et sensiblement à la parallèle les uns des autres.

2. Système d'épuration des gaz d'échappement selon la revendication 1, **caractérisé en ce que** l'élément tubulaire d'injection d'urée (4) est en forme de U.

3. Système d'épuration des gaz d'échappement selon la revendication 1 ou 2, **caractérisé en ce que**
le carter est divisé par au moins trois parois de séparation radiales (5, 6, 7, 8) écartées les unes des autres en au moins quatre chambres (I, II, III, IV, V), la première paroi de séparation (5) entre la première chambre (I) et la deuxième chambre (II), la deuxième paroi de séparation (6) entre la deuxième chambre (II) et la troisième chambre (III), ainsi que la troisième paroi de séparation (7) entre la troisième chambre (III) et la quatrième chambre (IV) comportant des orifices de passage pour un logement fixé du catalyseur SCR (2), de l'élément de filtration de particules diesel (3), ainsi que de l'élément tubulaire (4).

4. Système d'épuration des gaz d'échappement selon la revendication 2 ou 3, **caractérisé en ce que**
l'élément de filtration de particules diesel (3) comporte une bride de raccordement (9) sur laquelle, un brûleur diesel (10) est fixé de façon amovible côté carter, la bride de raccordement étant située et fixée dans le plan d'une première extrémité axiale frontale (15) du carter associée à la première chambre (I), qui, ensemble avec la première paroi de séparation (5), délimite la première chambre (I) en direction axiale.

5. Système d'épuration des gaz d'échappement selon
l'une quelconque des revendications 1 à 4, **caractérisé en ce que**, dans la région de l'autre, deuxième extrémité axiale frontale (18) du carter, l'élément de filtration de particules diesel (3) comporte un fourreau d'épuration conique (16), avec un tampon borgne (17) susceptible de s'ouvrir sur l'extrémité rétrécie du fourreau d'épuration (16), l'extrémité rétrécie du fourreau d'épuration avec le tampon borgne se situant dans le plan de la deuxième extrémité axiale frontale (18) du carter.

6. Système d'épuration des gaz d'échappement selon l'une quelconque des revendications 1 à 5, **caractérisé en ce que**
l'élément de filtration de particules diesel (3) présente une première perforation d'enveloppe (19) dans la région de la troisième chambre (III), pour un passage des gaz d'échappement en direction radiale vers l'extérieur.

7. Système d'épuration des gaz d'échappement selon l'une quelconque des revendications 1 à 6, **caractérisé en ce que**
l'élément de filtration de particules diesel (3) présente une entrée radiale des gaz d'échappement dans la région de la première chambre (I), une tubulure d'entrée des gaz d'échappement (20) étant prévue du côté de l'enveloppe du carter.

8. Système d'épuration des gaz d'échappement selon l'une quelconque des revendications 2 à 7, **caractérisé en ce que**
l'élément tubulaire (4) en forme de U comporte un court tronçon tubulaire rectiligne (21) avec une entrée axiale pour les gaz d'échappement (22) dans la région de la troisième chambre (III) et un tronçon tubulaire rectiligne plus long (23), avec une sortie axiale pour les gaz d'échappement (24) dans la région de la quatrième chambre (IV),ainsi qu'un tronçon de courbure à 180° (25), dans la région de la première chambre (I), une tubulure d'alimentation d'urée (11) rectiligne, sensiblement orientée vers l'axe (32) précité débouchant environ dans le prolongement de l'axe (32) du tronçon tubulaire plus long (23) dans le tronçon de courbure à 180° (25), qui arrive au moins jusqu'à la première extrémité axiale (15) du carter.

9. Système d'épuration des gaz d'échappement selon la revendication 8, **caractérisé en ce que**
les tronçons tubulaires rectilignes court et long (21, 23) s'étendent à la parallèle, à la même hauteur du carter.

10. Système d'épuration des gaz d'échappement selon la revendication 8 ou 9, **caractérisé en ce que**
le tronçon tubulaire rectiligne plus court (21) présente une perforation d'enveloppe (33) dans la région de la deuxième chambre (II).

11. Système d'épuration des gaz d'échappement selon l'une quelconque des revendications 1 à 10, **caractérisé en ce que**
le catalyseur SCR (2) présente côté sortie dans la région de la première chambre (I) un élément de carter creux pour la sortie des gaz d'échappement (26) orienté en direction axiale, alors que le coeur du catalyseur (27) se situe dans la région des quatrième, troisième et deuxième chambres (IV, III, II).

12. Système d'épuration des gaz d'échappement selon la revendication 11, **caractérisé en ce que**
dans la région de la première chambre (I), l'élément de carter pour la sortie des gaz d'échappement (26) du catalyseur SCR (2) présente un orifice de sortie des gaz d'échappement côté enveloppe (28), sur lequel est raccordé un raccord coudé (29), qui conduit vers la première extrémité axiale (15) du carter et qui forme la sortie des gaz d'échappement du silencieux pour gaz d'échappement (1).

13. Système d'épuration des gaz d'échappement selon la revendication 11 ou 12, **caractérisé en ce que**
l'élément de carter creux pour la sortie des gaz d'échappement (26) présente une perforation d'enveloppe (30) et une perforation frontale (31).

14. Système d'épuration des gaz d'échappement selon l'une quelconque des revendications 11 à 13, **caractérisé en ce que**
le carter du coeur du catalyseur (27) comporte des moulures de renfort (34).

15. Système d'épuration des gaz d'échappement selon l'une quelconque des revendications 1 à 14, **caractérisé en ce que**
le catalyseur SCR (2) comporte un carter en forme de caisson.

16. Système d'épuration des gaz d'échappement selon l'une quelconque des revendications 2 à 15, **caractérisé en ce que**
dans la région de la première et de la deuxième chambres (I, II), le catalyseur SCR (2) et l'élément de filtration des particules diesel (3), ainsi que l'élément tubulaire en forme de U (4) sont logés dans une matière absorbante et **en ce que** par ailleurs, la première et la deuxième chambres (I, II) sont conçues en tant que chambres d'absorption, alors que la troisième et la quatrième chambres (III, IV) sont des chambres de réflexion.

17. Système d'épuration des gaz d'échappement selon l'une quelconque des revendications 3 à 16, **caractérisé en ce que**
sur la deuxième extrémité axiale frontale (18) du carter est prévue une cinquième chambre (V) montée en aval de la quatrième chambre (IV), conçue en tant que chambre d'absorption et contenant de la matière absorbante pour silencieux, la quatrième paroi de séparation (8) comportant des perforations.
